# EUROPEAN PATENT APPLICATION

(11) **EP 4 242 955 A1**
(43) Date of publication of application: **13.09.2023**
(21) Application number: 21891044.6
(22) Date of filing: 05.11.2021
(51) Int. Cl.: G06Q 30/06

(54) **USER PROFILE-BASED OBJECT RECOMMENDATION METHOD AND DEVICE**

(30) Priority: 12.11.2020 CN 202011264500
(71) Applicant: Beijing Wodong Tianjun Information Technology Co., Ltd., 100176 Beijing (CN); Beijing Jingdong Century Trading Co., Ltd., Beijing 100176 (CN)
(72) Inventor: CHEN, Boliang, Beijing 100176 (CN)
(74) Representative: FDST Patentanwälte
(86) International application number: PCT/CN2021/128877
(87) International publication number: WO 2022/100518

(57) **Abstract**

The present disclosure, which provides a method and device for recommending objects based on a user profile, relates to the field of computer technology. A specific embodiment of the method comprises: receiving user behavior data and user attribute information, and converting, by means of feature engineering, them into user behavior data to be processed and user attribute information to be processed; acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model; and obtaining, according to the prediction model or the statistical rule model, a user profile based on the user behavior data to be processed and the user attribute information to be processed, and then pushing object information to the user according to the user profile. Therefore, the embodiments of the present disclosure can solve the problem of a low marketing campaign efficiency caused by the existing low-accuracy user profiles.

## Description

### Cross-reference to Related Application

The present application claims priority from the Chinese Patent Application for invention, with an application number of 202011264500.8, filed on Nov. 12, 2020, the entire contents of which are incorporated herein by reference.

### Technical Field

The present invention relates to the field of computer technology, in particular to a method and device for recommending objects based on a user profile.

### Background Art

User profiles are the key to e-commerce marketing campaigns, personalized recommendations, basic data services, etc. Only by acquiring accurate user profile tags in real time can we compete for the best quality and most accurate user groups with the least cost in the shortest time, and then carry out various marketing promotions and other campaigns to promote customer acquisition and retention. Herein, the user profile, which is a series of data information (such as shopping information, personal information, etc.) included in the successfully registered user ID, is a virtual data collection.

In the process of implementing the present disclosure, the inventor has found that the prior art has at least the following problems:
For user profile modeling, the existing technical solutions usually use big data platforms to store data such as user shopping, and then classify user group data through manual analysis and modeling. Traditional user profiles require marked data, but the reality is that the marked data of most profile tags are not easy to obtain, or has a very high acquisition cost, or has a low accuracy even to an extent of being considered as noise data. That is to say, the traditional user profiles can only be used to handle user data in a single business scene (with tagged data). Therefore, the recommendation to the user based on the user profiles processed in the traditional manner has a low efficiency, a low accuracy, and poor user experience.

### Summary of the Invention

In view of this, embodiments of the present disclosure provide a method and device for recommending objects based on a user profile, which can solve the problem of a low marketing campaign efficiency caused by the existing low-accuracy user profiles.

In order to accomplish the above object, according to one aspect of the embodiments of the present disclosure, a method for recommending objects based on a user profile is provided, comprising: receiving user behavior data and user attribute information, and converting, by means of feature engineering, the user behavior data and the user attribute information into user behavior data to be processed and user attribute information to be processed; acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model; and obtaining, according to the prediction model or the statistical rule model, a user profile based on the user behavior data to be processed and the user attribute information to be processed, and then pushing object information to the user according to the user profile.

Optionally, receiving user behavior data comprises:
acquiring user behavior data under different categories according to a preset data quantity and data format.

Optionally, after receiving user behavior data and user attribute information, there is comprised:
invoking a preprocessing model to preprocess the user behavior data and the user attribute information.

Optionally, obtaining, according to the prediction model, a user profile based on the user behavior data to be processed and the user attribute information to be processed comprises:
calculating a user profile by a DDPG algorithm model of Actor network gradient fusion based on the user behavior data to be processed and the user attribute information to be processed.

Optionally, the DDPG algorithm model of Actor network gradient fusion comprises:
adding a cross-entropy loss value calculated by a preset supervised learning model to an Actor of the DDPG algorithm, to evaluate an output value of the Actor.

Optionally, obtaining, according to the statistical rule model, a user profile based on the user behavior data to be processed and the user attribute information to be processed comprises:
acquiring a preset deep reinforcement learning model and business rule model, and obtaining a corresponding first user profile and second user profile, respectively, through the user behavior data to be processed and the user attribute information to be processed; and
determining weights of the first user profile and the second user profile, according to a target operation effect index, to fuse the first user profile and the second user profile to obtain a final user profile.

Optionally, there is comprised:
using an Actor-Critic algorithm for the deep reinforcement learning model.

Besides, the present disclosure further provides a device for recommending objects based on a user profile, comprising:
an acquiring module for receiving user behavior data and user attribute information, and converting, by means of feature engineering, them into user behavior data to be processed and user attribute information to be processed; and
a processing module for acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model; and obtaining, according to the prediction model or the statistical rule model, a user profile based on the user behavior data to be processed and the user attribute information to be processed, and then pushing object information to the user according to the user profile.

An embodiment of the above invention has the following advantages or beneficial effects:
The present disclosure adopts different task processing manners for user behavior data and user attribute information with different characteristics, i.e., user profile processing supporting different scenes, and the supported scenes include: marked data tags, non-marked data, and business rule statistical calculation tag tasks. Moreover, the present disclosure can utilize deep reinforcement learning to train various processing models of user profiles in real time based on real data from online operations. Furthermore, the present disclosure integrates supervised learning and reinforcement learning, so that user profile processing will actually affect the user's behavior next time and the time after next through each campaign operation in the user's life cycle, that is, there is a correlation between the results of each processing.

The further effects of the above-mentioned non-conventional optional modes will be described below in conjunction with specific embodiments.

### Brief Description of the Drawings

The figures are used for a better understanding of the present disclosure, and do not constitute improper limitations to the present disclosure, wherein:
Fig. 1 is a schematic diagram of a main flow of a method for recommending objects based on a user profile according to a first embodiment of the present disclosure;
Fig. 2 is a schematic diagram of a main flow of a method for recommending objects based on a user profile according to another embodiment of the present disclosure;
Fig. 3 is a schematic diagram of main modules of a device for recommending objects based on a user profile according to an embodiment of the present disclosure;
Fig. 4 is an exemplary system architecture diagram to which the embodiments of the present invention can be applied;
Fig. 5 is a structural schematic diagram of a computer system suitable for implementing a terminal device or a server according to an embodiment of the present disclosure.

### Detailed Description of the Embodiments

Hereinafter, the exemplary embodiments of the present disclosure are described with reference to the figures, wherein various details of the embodiments of the present disclosure are included to facilitate the understanding, and the embodiments of the present invention should be considered as only exemplary ones. Therefore, those skilled in the art should recognize that various changes and modifications may be made to the embodiments described herein without departing from the scope and spirit of the present disclosure. Also, descriptions of well-known functions and structures are omitted hereinafter for clarity and conciseness.

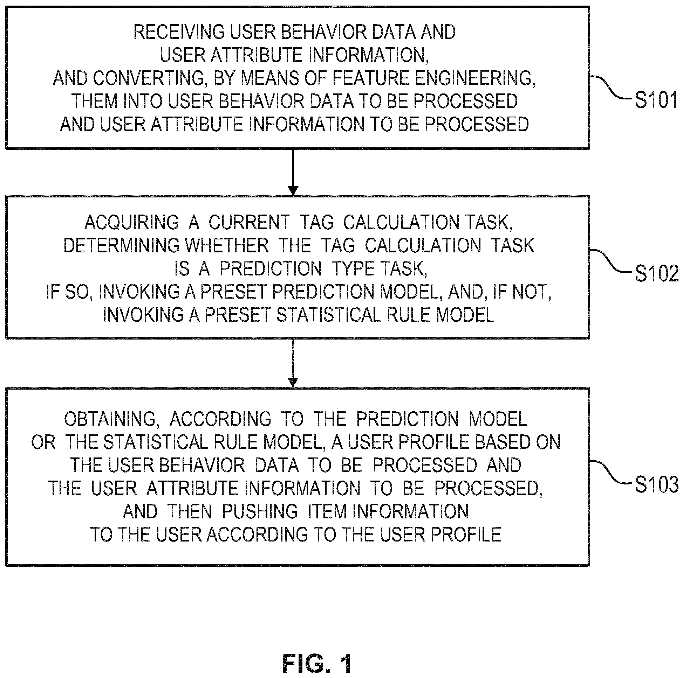

Fig. 1 is a schematic diagram of a main flow of a method for recommending objects based on a user profile according to a first embodiment of the present disclosure. As shown in Fig. 1, the method for recommending objects based on a user profile comprises:
Step S101: receiving user behavior data and user attribute information, and converting, by means of feature engineering, them into user behavior data to be processed and user attribute information to be processed.

In some embodiments, receiving user behavior data includes:
acquiring user behavior data under different categories according to a preset data quantity and data format. For example, for the analysis of user's gender data, it is first necessary to analyze the feature data involved in user's gender prediction, the completeness (i.e., format), size, and quantity of user behavior data under different categories, etc., to make basic preparations for subsequent analysis and mining.

In some other embodiments, after receiving user behavior data and user attribute information, a preprocessing model may be invoked to preprocess the user behavior data and the user attribute information. For example, preliminary preprocessing of the user behavior data, the user attribute information and the like includes processing of missing values, noise, outliers, data types, etc., and preprocessing operations such as data cleaning (including the processing of missing values, noise, outliers, etc.), data encoding, and data deformation (including standardization, regularization, scaling, etc.) in combination with analysis results.

It is worth noting that the feature engineering in step S101 is a process of processing records of the user behavior data and the user attribute information under different categories into data required by the model through operations such as transformation, intersection, mapping, and extraction.

Step S102: acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model.

In some embodiments, a user profile is calculated by a DDPG algorithm model of Actor network gradient fusion based on the user behavior data to be processed and the user attribute information to be processed. Further, a cross-entropy loss value calculated by a preset supervised learning model is added to an Actor of the DDPG algorithm, to evaluate an output value of the Actor. Herein, DDPG, with a full name of Deep Deterministic Policy Gradient, is a policy learning method that integrates the network into DPG, and fuses an Actor-Critic framework.

Step S103: obtaining, according to the prediction model or the statistical rule model, a user profile based on the user behavior data to be processed and the user attribute information to be processed, and then pushing object information to the user according to the user profile.

In some embodiments, if the preset statistical rule model is invoked, a user profile is obtained based on the user behavior data to be processed and the user attribute information to be processed, which includes:
acquiring a preset deep reinforcement learning model and business rule model, and obtaining a corresponding first user profile and second user profile, respectively, through the user behavior data to be processed and the user attribute information to be processed. Then, weights of the first user profile and the second user profile are determined, according to a target operation effect index, to fuse the first user profile and the second user profile to obtain a final user profile.

In further embodiments, an Actor-Critic algorithm is used for the deep reinforcement learning model. Herein, the deep reinforcement learning has three basic elements: state, action, and reward. The corresponding ones in the present disclosure are respectively as follows:
State is the user behavior data to be processed and the user attribute information to be processed after feature engineering processing, such as: sales volume, sales amount, user behaviors, product attributes, user and product cross-features, etc.

Action may be a label set in machine learning, a clustering category set in clustering tasks, calculation results in business rules, and so on.

Reward is to transform the goal to be achieved (e.g., increasing a click-through rate, increasing a GMV, etc.) into a specific reward function R and guide the Agent to accomplish the goal in the learning process. In the present disclosure, the user's PV (visit volume), sales volume, sales amount, etc. in operation campaigns are taken as rewards.

It is worth noting that the present disclosure can treat a profile model as the Agent and a user as the Environment, so issues such as profile model marketing can be regarded as sequential decision-making problems. Herein, every time a marketing campaign is conducted, the Agent (profile model) makes prediction and presents a prediction result to the user. According to the prediction result of the Agent (profile model), the user gives feedback signals such as clicking and browsing. The Agent (profile model) receives the feedback signals, makes new prediction strategies for new marketing campaigns, and recommends objects to the user. In this repeated trial-and-error process, continuous optimization will be carried out, and the Agent will gradually learn the optimal strategy.

To sum up, the present disclosure can utilize deep reinforcement learning to train a tag calculation algorithm model of user profiles in real time based on real data from online operations. It differs from the traditional user profile tag model training manner in: integrating supervised learning and reinforcement learning and adopting different fusion manners for different calculation scenes to optimize the traditional tag calculation manner, and the supported scenes include: marked data tags, non-marked data (clustering tag tasks), and business rule statistical calculation tag tasks. In other words, in the present disclosure, the user profile will actually affect the user's behavior next time and the time after next through each campaign operation in the user's life cycle, that is, there is a correlation between the results of each prediction of the profile model (for example, this campaign screens male users to sell a razor; if the model calculation result is accurate, the user may give support to the marketing campaign, and so on; this behavior is the user's feedback data, which should be added to the model in time for training; the model is more likely to predict the user as a male during the next push campaign; on the contrary, if the user is a female, the pushed razor is more likely to be ignored, and this behavior should be learned and utilized by the model in time to update the model).

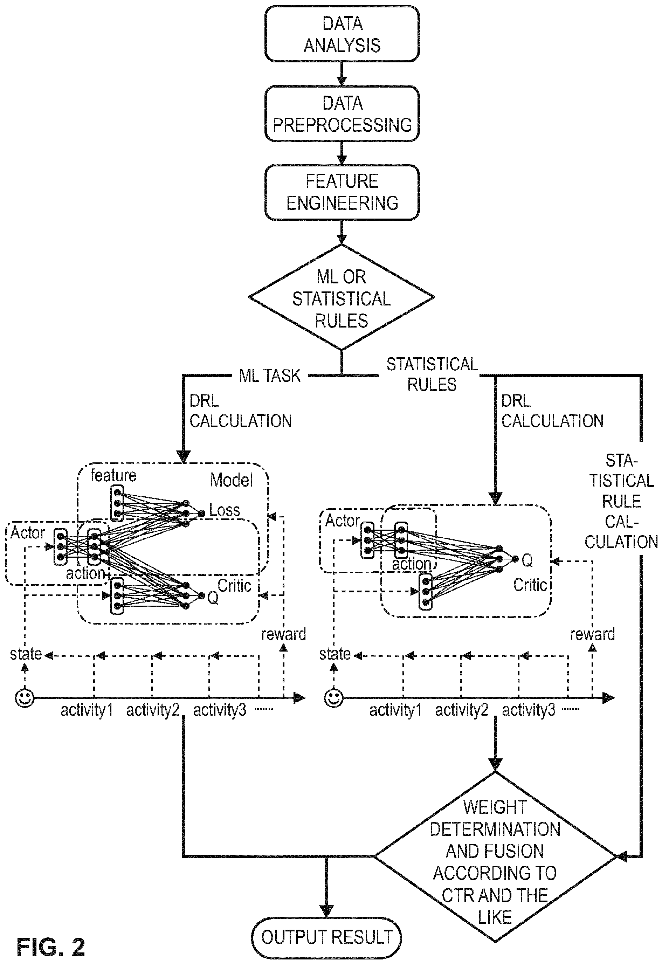

Fig. 2 is a schematic diagram of a main flow of a method for recommending objects based on a user profile according to another embodiment of the present disclosure (in Fig. 2, DRL is deep reinforcement learning, and ML is machine learning), wherein the method for recommending objects based on a user profile may comprise:
subjecting the received user behavior data and user attribute information to data analysis, data preprocessing and processing of feature engineering in sequence, to obtain user behavior data to be processed and user attribute information to be processed. Herein, the data analysis is to acquire user behavior data under different categories according to a preset data quantity and data format. The data preprocessing is to invoke a preprocessing model to preprocess the user behavior data and the user attribute information. The feature engineering is a process of processing records of the user behavior data and the user attribute information under different categories into data required by the model through operations such as transformation, intersection, mapping, and extraction.

After completing the feature engineering, determine whether or not the current tag calculation task is a prediction type task, if the current tag calculation task is a prediction type task, invoke a prediction model (the task flow on the left in Fig. 2), and, if the current tag calculation task is not a prediction type task, invoke a statistical rule model (the task flow on the right in Fig. 2). For example, if the current tag calculation task can be obtained simply by using statistical methods such as SQL calculation, the statistical rule model is invoked. If the current tag calculation task is a prediction type task, for example, most of the gender tags need to be calculated using machine learning algorithms but cannot be calculated by rules, the prediction model is invoked.

Moreover, the task flow on the left is added with a machine learning model on the basis of the DDPG algorithm for gradient fusion of an Actor network, so that the reinforcement learning model (such as the DDPG algorithm) can learn the gradient from the machine learning model. Preferably, the machine learning model in the task flow on the left in Fig. 2 can use a supervised learning model, for example: SVM (support vector machine), XGB (an industrial implementation of GBDT), etc. Specifically:
Two networks are first constructed for each of Actor and Critic in the DDPG algorithm, wherein Actor networks are Actor_eval_net and Actor_target_net, and Critic networks are Critic_eval_net and Critic_target_net. Herein, Actor_eval_net is inputted with state (which, in the present disclosure, is a feature vector: user behavior data to be processed and user attribute information to be processed), and outputted with action. Actor_target_ net is inputted with next_state (the next_state and the corresponding reward are obtained after the action acts on the environment), and outputted with next_action. Critic_eval_net is inputted with action, and outputted with a Q value corresponding to the action (the Q value refers to a Q (state, action) function (Quality) value, which is used to represent a discounted future reward under the condition that the agent takes a certain action in a certain state and then takes the optimal action). Critic_target_net is inputted with next_action and next_state, and outputted with a Q value corresponding to the action.

Taking the calculation of the user's gender tag as an example, the state inputted in the Actor_eval_net prediction network is a feature corresponding to the user's gender, i.e., a feature calculated by the feature engineering, including: user behavior data under different categories such as browsing, ordering, additional purchases, clicks, comments, and the like, as well as sales volume, sales amount, product attributes, user and product cross-features, and the like. The output is that the user's gender prediction tag corresponding to the action is male (0), female (1), or unknown (-1). After selecting the action of male or female, get feedback from crowd users in the environment (that is, in the corresponding marketing campaign, the business personnel select the corresponding required gender according to the marketing scene conditions, and make placements, push messages, etc.). For example, if a razor is pushed to a man, the male user may engage in behaviors such as clicking, placing an order, making a purchase, and commenting. These behaviors under different categories will be inputted to Actor_target_net as the next input state (next state), and then next_action is outputted. The same input of the Critic_eval_net network is action obtained according to the current state (selection of male or female), and a Q value corresponding to the action is outputted. Critic_target_net is inputted with the next action and the next state, and outputted with the corresponding Q value.

Preferably, the present disclosure utilizes a supervised learning model (for example, the supervised learning model may be SVM (support vector machine), XGBoost (an abbreviation for Extreme Gradient Boosting, which is an efficient implementation of GBDT), etc.) to input corresponding features (user behavior data and user attributes information) and marked data, train the model and predict unmarked data, and complete the unmarked data. At this time, all the data to be inputted are marked, and then a layer of network is constructed to calculate a cross-entropy loss of the Actor's output in the supervised learning model: 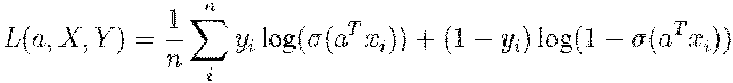 wherein a represents the action outputted by the network, x represents the user behavior data and the user attribute information, y represents the marked data, and σ represents the network parameter to be trained.

In this way, the final gradient loss function of the Actor becomes: 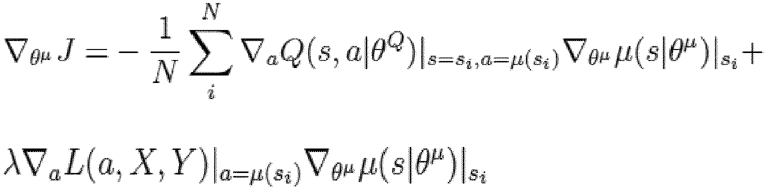 wherein s represents the state of the agent at a certain moment; a represents the action performed at a certain moment; Q(s, a) represents the discounted future reward under the condition that the agent takes a certain action in a certain state and then takes the optimal action; λ represents the hyperparameter to be adjusted, which is a weight of the supervised learning model; θ represents the network parameter of the Actor; µ represents the action value of the corresponding actor in the state at a certain moment; and N represents the number of model training iterations.

Therefore, the present disclosure adds a cross-entropy loss calculated by the supervised learning model to an Actor, to evaluate an output value of the Actor, which enhances the stability of the reinforcement learning model and makes full use of the marked data to improve the performance of the entire prediction model.

Moreover, the task flow on the right is to utilize user feedback data to perform deep reinforcement learning model calculation (the training flow therein is the same as the task flow on the left (without the Model part)), and business rule model calculation (for example, calculating whether the user is married, and if there are no marked data as a training set, performing the business rule model calculation, e.g., whether the names of historical purchased objects include married feature words such as "pregnancy" and "child"), finally determine the weights of the two calculation results according to online operation effect indexes (e.g., conversion rate, dwell time, etc.), and then fuse them.

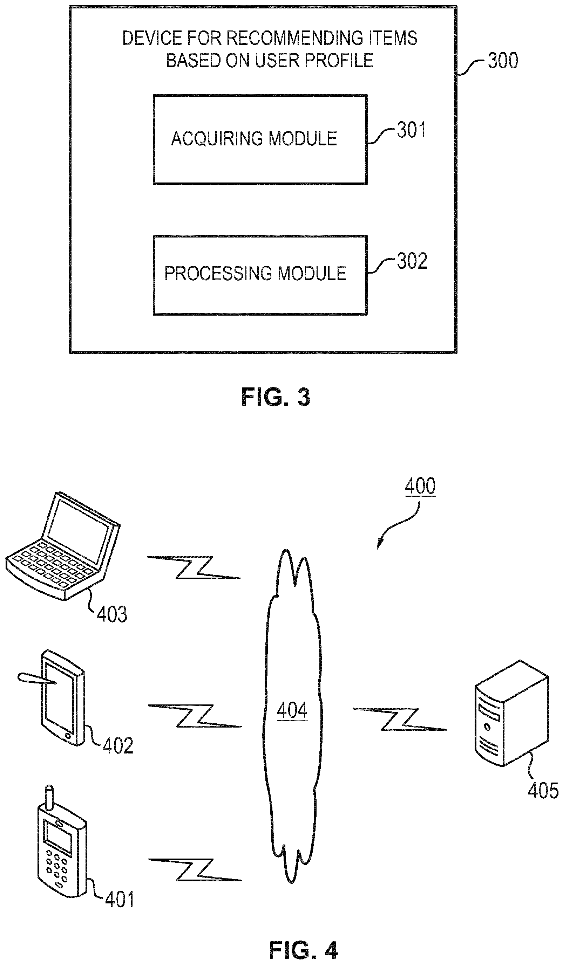

Fig. 3 is a schematic diagram of main modules of a device for recommending objects based on a user profile according to an embodiment of the present disclosure. As shown in Fig. 3, the device 300 for recommending objects based on a user profile comprises an acquiring module 301 and a processing module 302. Herein, the acquiring module 301 receives user behavior data and user attribute information, and converts, by means of feature engineering, them into user behavior data to be processed and user attribute information to be processed. The processing module 302 acquires a current tag calculation task, determines whether or not the tag calculation task is a prediction type task, if the tag calculation task is a prediction type task, invokes a preset prediction model, and, if the tag calculation task is not a prediction type task, invokes a preset statistical rule model; and obtains, according to the prediction model or the statistical rule model, a user profile based on the user behavior data to be processed and the user attribute information to be processed, and then pushes object information to the user according to the user profile.

In some embodiments, the acquiring module 301 receives user behavior data, which includes:
acquiring user behavior data under different categories according to a preset data quantity and data format.

In some embodiments, after the acquiring module 301 receives user behavior data and user attribute information, there is comprised:
invoking a preprocessing model to preprocess the user behavior data and the user attribute information.

In some embodiments, the processing module 302 obtains, according to the prediction model, a user profile based on the user behavior data to be processed and the user attribute information to be processed, which includes:
calculating a user profile by a DDPG algorithm model of Actor network gradient fusion based on the user behavior data to be processed and the user attribute information to be processed.

In some embodiments, the DDPG algorithm model of Actor network gradient fusion includes:
adding a cross-entropy loss value calculated by a preset supervised learning model to an Actor of the DDPG algorithm, to evaluate an output value of the Actor.

In some embodiments, the processing module 302 obtains, according to the statistical rule model, a user profile based on the user behavior data to be processed and the user attribute information to be processed, which includes:
acquiring a preset deep reinforcement learning model and business rule model, and obtaining a corresponding first user profile and second user profile, respectively, through the user behavior data to be processed and the user attribute information to be processed; and
determining weights of the first user profile and the second user profile, according to a target operation effect index, to fuse the first user profile and the second user profile to obtain a final user profile.

In some embodiments, an Actor-Critic algorithm is used for the deep reinforcement learning model.

It should be noted that the method for recommending objects based on a user profile and the device for recommending objects based on a user profile according to the present disclosure have a correspondence relationship in the specific implementation, so the repeated contents are no longer described.

Fig. 4 shows an exemplary system architecture 400 to which the method for recommending objects based on a user profile or the device for recommending objects based on a user profile according to the embodiments of the present disclosure can be applied.

As shown in Fig. 4, the system architecture 400 may include terminal devices 401, 402, 403, a network 404, and a server 405. The network 404 is used to provide a communication link medium between the terminal devices 401, 402, 403 and the server 405. The network 404 may include various connection types, such as wired and wireless communication links, fiber optic cables, etc.

The user can use the terminal devices 401, 402, 403 to interact with the server 405 via the network 404 to receive or send messages, etc. Various communication client applications, such as shopping applications, web browser applications, search applications, instant messaging tools, email clients, and social platform software, may be installed on the terminal devices 401, 402, 403 (which are only examples).

The terminal devices 401, 402, 403 may be various electronic devices that have a user profile-based object recommendation screen and support web browsing, including but not limited to smart phones, tablet computers, laptop computers, desktop computers, and so on.

The server 405 may be a server that provides various services, for example, a back-end management server that provides support for shopping websites browsed by users using the terminal devices 401, 402, 403 (which is only an example). The back-end management server can subject the received data such as a product information query request to processing such as analysis, and feed the processing results (such as target push information and product information, which are only examples) back to the terminal devices.

It should be noted that the method for recommending objects based on a user profile as provided by the embodiment of the present disclosure is generally executed by the server 405, and, accordingly, the calculating device is generally provided in the server 405.

It should be understood that the numbers of the terminal device, the network and the server in Fig. 4 are only illustrative. According to implementation needs, there may be any numbers of the terminal device, the network and the server.

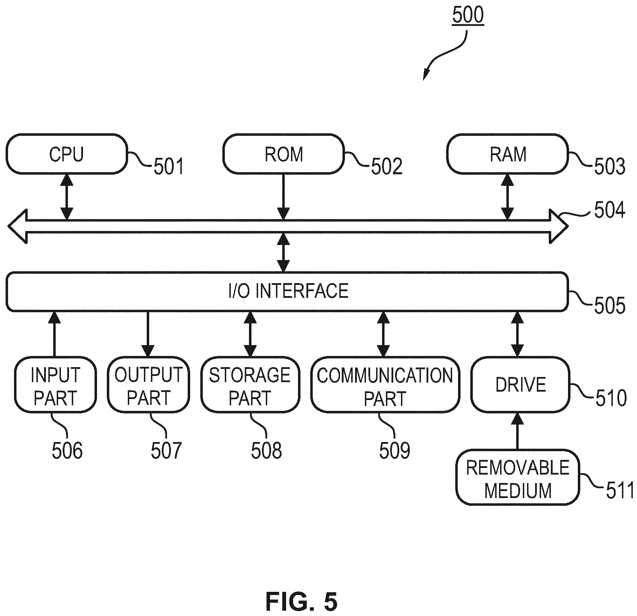

Referring now to Fig. 5, it shows a structural schematic diagram of a computer system 500 suitable for implementing a terminal device according to an embodiment of the present disclosure. The terminal device shown in Fig. 5, which is only an example, should not bring any limitation to the function and use scope of the embodiment of the present disclosure.

As shown in Fig. 5, the computer system 500 includes a central processing unit (CPU) 501, which can perform various appropriate actions and processes according to a program stored in a read-only memory (ROM) 502 or a program loaded from a storage part 508 into a random access memory (RAM) 503. Various programs and data required for the operation of the computer system 500 are also stored in the RAM 503. The CPU 501, the ROM 502, and the RAM 503 are connected to each other through a bus 504. An input/output (I/O) interface 505 is also connected to the bus 504.

The following components are connected to the I/O interface 505: an input part 506 including a keyboard, a mouse and the like; an output part 507 including a cathode ray tube (CRT), a liquid crystal user profile-based object recommender (LCD), a speaker and the like; a storage part 508 including a hard disk and the like; and a communication part 509 including a network interface card such as a LAN card, a modem and the like. The communication part 509 performs communication processing via a network such as the Internet. A drive 510 is also connected to the I/O interface 505 as required. A removable medium 511, such as a magnetic disk, an optical disk, a magneto-optical disk, a semiconductor memory or the like, is installed on the drive 510 as required, so that the computer program read from it is installed into the storage part 508 as required.

In particular, according to the embodiment disclosed in the present disclosure, the process described above with reference to the flowchart may be implemented as a computer software program. For example, the embodiment disclosed in the present invention includes a computer program product, which includes a computer program carried on a computer-readable medium, and the computer program contains a program code for executing the method shown in the flowchart. In such an embodiment, the computer program may be downloaded and installed from the network through the communication part 509, and/or installed from the removable medium 511. When the computer program is executed by the central processing unit (CPU) 501, the above-mentioned functions defined in the system of the present disclosure are executed.

It should be noted that the computer-readable medium shown in the present invention may be a computer-readable signal medium or a computer-readable storage medium, or any combination of the above two. The computer-readable storage medium may be, for example, but not limited to, an electrical, magnetic, optical, electromagnetic, infrared or semiconductor system, device or device, or a combination of any of the above. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present invention, the computer-readable storage medium may be any tangible medium that contains or stores a program, and the program may be used by or in combination with an instruction execution system, apparatus or device. Moreover, in the present invention, the computer-readable signal medium may include a data signal propagated in baseband or as a part of a carrier wave, in which a computer-readable program code is carried. The propagated data signal can take many forms, including but not limited to an electromagnetic signal, an optical signal, or any suitable combination of the above. The computer-readable signal medium may also be any computer-readable medium other than the computer-readable storage medium, and the computer-readable medium can send, propagate, or transmit a program used by or in combination with an instruction execution system, apparatus or device. The program code contained on the computer-readable medium can be transmitted by any suitable medium, including but not limited to: wireless, wire, optical cable, RF and the like, or any suitable combination of the above.

The flowcharts and block diagrams in the drawings illustrate possible system architectures, functions and operations of the system, method and computer program product according to various embodiments of the present disclosure. In this regard, each block in the flowcharts or block diagrams can represent a module, a program segment or a part of a code, which contains one or more executable instructions for realizing the specified logic function. It should also be noted that, in some alternative implementations, the functions marked in the blocks may also occur in a different order from that marked in the drawings. For example, two blocks shown in succession can actually be executed substantially in parallel, and they can sometimes be executed in a reverse order, depending on the functions involved. It should further be noted that each block in the block diagrams or flowcharts, and the combination of blocks in the block diagrams or flowcharts can be implemented by a dedicated hardware-based system that performs the specified functions or operations, or can be implemented by a combination of dedicated hardware and computer instructions.

The modules involved in the embodiments described in the present disclosure can be implemented by software or hardware. The described modules can also be provided in a processor, which, for example, can be described as: a processor including an acquiring module and a processing module. Herein, the names of these modules do not constitute limitations to the modules themselves under certain circumstances.

As another aspect, the present disclosure also provides a computer-readable medium, which may be included in the device described in the above embodiment or may exist alone without being assembled into the device. The above computer-readable medium carries one or more programs that, when executed by a device, cause the device to include: receiving user behavior data and user attribute information, and converting, by means of feature engineering, them into user behavior data to be processed and user attribute information to be processed; acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model; and obtaining, according to the prediction model or the statistical rule model, a user profile based on the user behavior data to be processed and the user attribute information to be processed, and then pushing object information to the user according to the user profile.

The technical solutions according to the embodiments of the present disclosure can solve the problem of a low marketing campaign efficiency caused by the existing low-accuracy user profiles.

The above specific embodiments do not constitute limitations to the scope of protection of the present disclosure. Those skilled in the art should understand that, depending on design requirements and other factors, various modifications, combinations, sub-combinations and replacements may occur. Any modifications, equivalent substitutions, improvements and the like made within the spirit and principle of the present disclosure shall be included in the scope of protection of the present disclosure.

## Claims

1. A method for recommending objects based on a user profile, comprising:
receiving user behavior data and user attribute information, and converting, by means of feature engineering, the user behavior data and the user attribute information into user behavior data to be processed and user attribute information to be processed;
acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model; and
obtaining, according to the prediction model or the statistical rule model, a user profile based on the user behavior data to be processed and the user attribute information to be processed, and then pushing object information to the user according to the user profile.

2. The method according to claim 1, wherein receiving user behavior data comprises:
acquiring user behavior data under different categories according to a preset data quantity and data format.

3. The method according to claim 1, wherein, after receiving user behavior data and user attribute information, further comprising:
invoking a preprocessing model to preprocess the user behavior data and the user attribute information.

4. The method according to claim 1, wherein obtaining, according to the prediction model, the user profile based on the user behavior data to be processed and the user attribute information to be processed comprises:
calculating a user profile by a DDPG algorithm model of Actor network gradient fusion based on the user behavior data to be processed and the user attribute information to be processed.

5. The method according to claim 4, wherein the DDPG algorithm model of Actor network gradient fusion comprises:
adding a cross-entropy loss value calculated by a preset supervised learning model to an Actor of the DDPG algorithm, to evaluate an output value of the Actor.

6. The method according to claim 1, wherein obtaining, according to the statistical rule model, the user profile based on the user behavior data to be processed and the user attribute information to be processed comprises:
acquiring a preset deep reinforcement learning model and business rule model, and obtaining a respective first user profile and second user profile, respectively, through the user behavior data to be processed and the user attribute information to be processed; and
determining weights of the first user profile and the second user profile, according to a target operation effect index, to fuse the first user profile and the second user profile to obtain a final user profile.

7. The method according to claim 6, further comprising:
using an Actor-Critic algorithm for the deep reinforcement learning model.

8. A device for recommending objects based on a user profile, comprising:
an acquiring module for receiving user behavior data and user attribute information, and converting, by means of feature engineering, the user behavior data and the user attribute information into user behavior data to be processed and user attribute information to be processed; and
a processing module for acquiring a current tag calculation task, determining whether or not the tag calculation task is a prediction type task, if the tag calculation task is a prediction type task, invoking a preset prediction model, and, if the tag calculation task is not a prediction type task, invoking a preset statistical rule model; and
obtaining, according to the prediction model or the statistical rule model, a user profile based on the user behavior data to be processed and the user attribute information to be processed, and then pushing object information to the user according to the user profile.

9. An electronic device, comprising:
one or more processors; and
a storage device for storing one or more programs that, when executed by the one or more processors, cause the one or more processors to implement the method according to any one of claims 1 to 7.

10. A computer-readable medium having a computer program stored thereon that, when executed by a processor, implements the method according to any one of claims 1 to 7.
